Europäisches Patentamt

(19) European Patent Office

Office européen des brevets

(11) Publication number: **0 066 590**
**B1**

(12) # EUROPEAN PATENT SPECIFICATION

(45) Date of publication of patent specification: 16.09.87

(21) Application number: 82900010.8

(22) Date of filing: 09.12.81

(86) International application number:
PCT/AU81/00188

(87) International publication number:
WO 82/02105 24.06.82 Gazette 82/16

(51) Int. Cl.⁴: **G 06 K 9/00,** G 06 K 9/62,
G 06 K 7/00

(54) READING INFORMATION STORED IN MULTIPLE FRAME FORMAT.

(30) Priority: 09.12.80 AU 6831/80

(43) Date of publication of application:
15.12.82 Bulletin 82/50

(45) Publication of the grant of the patent:
16.09.87 Bulletin 87/38

(84) Designated Contracting States:
AT CH DE FR GB LI LU NL SE

(56) References cited:
EP-A-0 018 211
AU-D-2 758 857
GB-A-1 117 419
US-A-3 322 935
US-A-3 727 183
US-A-3 780 266
US-A-3 795 902
US-A-3 872 445
US-A-3 959 784
US-A-4 198 701
US-A-4 228 468

(73) Proprietor: STORAGE RESEARCH PTY. LTD.
Suite 208, 852 Canterbury Road
Box Hill Victoria 3128 (AU)

(72) Inventor: HUDSON, Geoffrey Melville
320 Nicholson Street
Fitzroy, Vic 3065 (AU)

(74) Representative: Knott, Stephen Gilbert et al
MATHISEN, MACARA & CO. The Coach House
6-8 Swakeleys Road
Ickenham Uxbridge Middlesex UB10 8BZ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to the reading of information stored in a medium in one or more channels of successive record frames each containing a plurality of discrete record entries. More particularly, the invention is concerned with overcoming misregistration between the record entries and the detector elements of the reading head, with a view to rendering more practical the storage of digital data in optically scannable form such as on photographic film or on microfiche.

Various arrangements have been proposed for reading digital data encoded on optically sensitive media. These have included semi-mechanical devices involving steerable mirrors in an optical magnifier disposed between the record frames and optically responsive detection equipment. Such devices are shown, for example, in United States patent 4,251,126 to Minoura et al, 3,072,889 to Willcox and, in the context of videodiscs in United States patent 4,118,735 to Wilkinson. For higher speed readout, an optically based system employing prism optics to project images of multiply coloured record frames onto successive charge storage detectors, is disclosed in United States patent 3,959,784.

While attention is devoted in the art to achieving improved readout speed, frame registration and correction for defocusing effects, the present inventor believes that the question of compensating for misregistration within a frame has not been adequately addressed. The traditional approach has been to simply ensure sufficient mechanical precision in the location of read heads with respect to the channels in which the record frames are arranged. In the case of magnetic tape storage, for example, the 7 or 9 heads each read their own track, and the tape is aligned mechanically to prevent a read head reading the wrong track.

As the density of data increases, the mechanical difficulty of this operation also increases and the cost of the required mechanism rises. This effect is demonstrated in the case of video discs, where a single laser beam is servo guided along a track 1 micron wide. United States patent 3,919,697 to Walker discloses an arrangement in which the data channels or tracks are bordered and separated by "tracking information" to maintain head alignments.

It will be appreciated that, in the present context, misregistration may refer to the case where the detector elements are displaced by an integral multiple n of record entry spacings, in the case of digital data, bit spacings, or to the case of fractional misregistration. It is believed that were the problem to be adequately overcome, the storage of data, especially digital data on photographic film, must notably on microfiche, would become a highly attractive proposition. The advantages of microfiche storage over, for example, magnetic tape storage are appreciated but the substitution would not be economically feasible for the reasons explained. Magnetic tapes, recorded at 10,000 bits per linear inch, can store 160,000 bits per square inch, while optical media, at 30 square microns per bit, can provide a data density 134 times greater. In situations such as distribution of information, where a read-only facility is appropriate, this increase in data density can provide significant advantage, providing the reader does not have to achieve a commensurate physical registration, which would involve high costs.

U.S. Patent No. 3322935 discloses document scanning apparatus for interpreting code marks passing along an optical track. The device includes a detector for reading simultaneously the record entries in two such tracks and a guard band, and, by detecting the location of the guard band, selects only the outputs of some of the detector elements, thus compensating for misregistration of the tracks and the array.

It is therefore known, from this disclosure, to provide a method of reading information stored in a medium as multiple machine readable record entries arranged in frames which are themselves arranged in one or more channels which record entries are indicative of values from a limited set of possible values, comprising: observing each frame in turn with a substantially known array of detector elements each having a limited field of observation such that each record entry is at least partly within the field of observation of at least one detector element, thereby to produce a first set of observed values for each frame represented by the states and/or outputs of the detector elements; deriving from the first set of observed values for each frame a second set of values, each being one of said possible values, representing record entries of the frame; and utilising the observations by the array of detector elements to identify one or more marker patterns from which correction for integral misregistration between the record entries and the detector elements is derived.

This known device, however, requires a large number of detector elements for each record entry, with consequential disadvantages in cost and size, and in its ability to resolve record patterns which are small in relation to the detector dimensions.

According to a first aspect, the invention consists in a method as described above, characterized in that each detector element responds to each record entry within its field of observation in relation to the fraction of the record entry within the field of observation; and, in deriving the second set of values, the first set of observed values relating to the record entries are manipulated utilising the limitations on the range of said possible values so that at least those observed values of the first set ascertained not to be equal to said possible values are modified to become one of said possible values and correct for any fractional misregistration between the record entries and the detector elements.

Thus, in accordance with the present invention, the second set of values is derived directly from the observed values, without the need first to locate a "guard band". Fractional misregistration is overcome by manipulation of the initial detector values, in most cases without attempting to achieve actual registration. By arranging that each detector element responds to each record entry within its field of observation in relation to the fraction of the record entry within its field of observation, and using the output accordingly, the number of detectors required is only of the order of the number of record entries per frame.

The array of detector elements is preferably of greater span than each record frame, such that the detector can observe record entries from more than one frame. The record entries and the detector elements will typically be equispaced in linear arrays. The array may be defined by one or more detectors arranged to observe successive spatial positions at which they form transitory detector elements.

Alternatively, the detector elements may comprise segments of a continuous linear detector arranged so that the values observed by each segment can be output separately from the values observed by other segments.

In a preferred embodiment outputs from successively positioned detector elements are successively presented at regular intervals, said modified values, while being restricted to values representing only said possible values, are produced at times which vary from the times of presentation of the detector element outputs in a way which reflects the magnitudes of the detector outputs.

According to a further embodiment, the readable values are the binary numbers 1 and 0, the centre-to-centre spacing between detector elements and between record entries, as presented to the detector elements, is equal and uniform, and the set of modified values is derived in part by serially carrying finite observed values less than a prescribed first threshold, itself substantially less than the observed value representing the possible values 1, for addition to respective, serially ordered, other observed values such that the resultant summations exceed said first threshold, but subject to each carried value not exceeding the observed value to which it is added by an amount greater than a second threshold.

According to a still further embodiment, the states and/or output of the detector elements are read serially so as effectively to produce a time based analogue signal comprising said set of observed values, and said modified values are derived therefrom by analysis of said analogue signal. This analysis can be effected for example, by the use of digital communication circuitry such as a universal asynchronous receiver/transmitter (UART).

The record entries are advantageously optically scannable zones of variable or varying opacity and the medium is then suitably photographic film, for example in microfiche format.

Said marker pattern(s) are typically unable to be replicated in the data, advantageously identify the start and/or end of the respective frames, and are preferably utilized to assign positions and hence significance to each record entry independently of the detector element(s) used to observe it.

The invention, according to a second aspect, provides apparatus for carrying out the aforesaid method, comprising a holder to temporarily support or retain said medium; a substantially known array of detector elements movable relative to said holder, each element having a limited field of observation; means to scan each frame with said array such that each record entry is at least partly within the field of observation of at least one detector element to produce a first set of observed values for each frame represented by the state and/or outputs of the detector elements; and means arranged to receive the respective sets of observed values and to derive from the observed values for each frame a second set of values, each being one of said possible values, representing record entries of the frame, said means including means for utilizing the observations by the array of detector elements to identify one or more marker patterns and means for utilizing said marker pattern(s) to correct for integral misregistration between the record entries and the detector elements; characterized in that each detector element in use responds to each record entry within its field of observation in relation to the fraction of the record entry lying within the field of observation; and in that said deriving means, in deriving the second set of values is arranged to manipulate the first set of observed values relating to the record entries, utilizing the limitations on the range of said possible values, so that at least those observed values ascertained not to be equal to possible values are modified to become one of said possible values and correct for any fractional misregistration between the record entries and the detector elements.

Said scanning means may include a drive arranged to selectively relatively move the array over the medium in either or both of two mutually perpendicular directions, preferably such that these directions are parallel to the record frames and parallel to the channels of the medium. In practice, it is believed that it may be preferable to physically move the holder rather than the array of detector elements.

Alternatively, for optically scanning record entries, the scanning means may include a cylindrically curved mirror disposed so that the record frame of a medium in said holder lies on the face of the mirror, and a further mirror mounted substantially at the axis of curvature of the cylindrical mirror for rotation about an axis parallel to said axis of curvature, whereby optical paths are successively provided between the record frames of a channel and the array of detector elements.

In an alternative embodiment for optically scanning record entries, the scanning means includes a spherical or paraboloidal concave mirror or convex lens disposed to face the record frame of a medium holder, and a further smaller mirror mounted substantially at the focus of the concave mirror for rotation about at least one axis, whereby optical paths are successively provided between the record frames of a channel and the array of detector elements.

The array advantageously includes a semi-conductor device comprising a Field-effect transistor layer which has one major face in electrically conductive contact with a photoelectric or magneto-electric layer and another major face in electrically conductive contact with a juxtaposed conductor layer, and a strip of material in proximity to the gate of the Field-effect transistor layer selected whereby on propagation of a wave in said material a voltage is generated which opens a moving conduction window in the Field-effect transistor layer.

The invention will be further described, by way of example only, with reference to the accompanying diagrams, in which:

Figure 1 shows an arrangement for successively observing record frames in a microfiche medium;

Figures 2 and 3 show alternative arrangements for observing record frames in any medium in which the record entries are optically scannable;

Figure 4A represents a frame of record entries, in the form of binary bits, and an array of detector elements, the frame and the elements being misregistered both integrally and fractionally;

Figure 4B represents the set of values observed by the array of detector elements of Figure 4;

Figure 4C represents a set of modified values derived from the observed values of Figure 4B in accordance with an embodiment of one aspect of the invention, the modified values indicating record entries of the frame shown in Figure 4A; and

Figure 5 is a cross-section of a semi-conductor device which may be used in the detector array.

For the purposes of explanation, the ensuing discussion shall be based upon a number of simplifications. It will be assumed that the medium in which the information is stored is a microfiche, and that such information comprises digital data arranged in a series of linear record frames in one or more parallel channels. The frames extend perpendicularly to the channels and the record entries are indicative of the binary numbers 1 and 0, these comprising the limited set of possible values. Hence, the record entries, which might for example comprise spots of substantially variable opacities, will herein be referred to as bits, but it is to be emphasized that none of these simplifications constitute limitations on the ambit of the invention. For example, the record entries might be spots of magnetization or transitions from one value of opacity, or one magnetic field intensity or direction, to another.

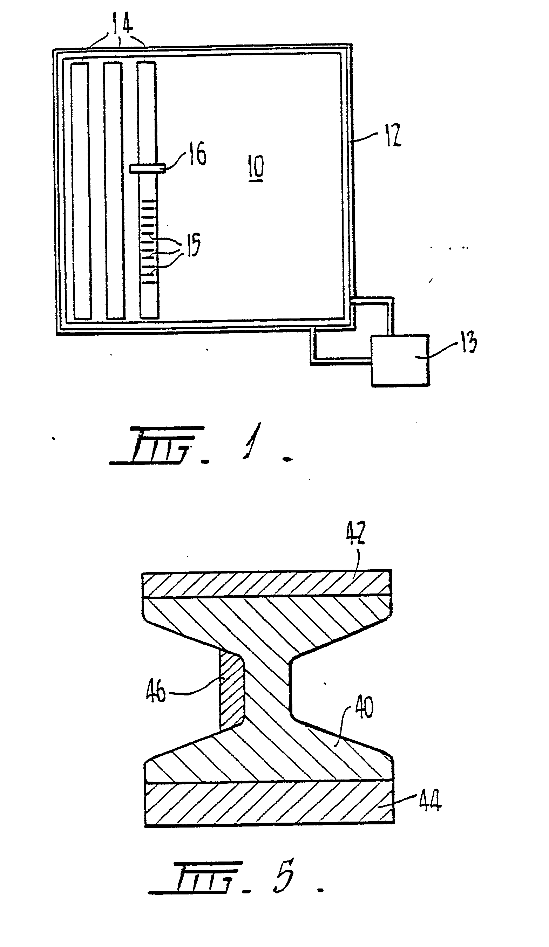

Figure 1 shows a simple cartesian arrangement by which the bits in the microfiche might be observed. The microfiche 10 is placed in a holder 12 so that the channels 14 of data are aligned in a specific direction. Extending perpendicularly to this direction is a read head 16 having multiple detector elements. Associated with holder 12 is a drive 13 not detailed, by which the holder may be moved either parallel to the channels or parallel to the frames 15 or both so as to selectively relatively move the array of detector elements relative to the medium in either or both of these two mutually perpendicular directions. Drive 13 might comprise a threaded rod rotated by a motor, or an inelastic string or wire wound around a drum connected to a motor. It would be preferred that the drive moved the microfiche at substantially constant velocity parallel to the data channels and perpendicularly to the frames, but in a stepwise motion parallel to the frames and perpendicular to the channels. For this purpose, drive 13 may comprise an electric stepping motor to move the holder and the microfiche parallel to the frames and a separate electric motor operating at constant velocity to move the microfiche for observation of successive frames in the selected channel.

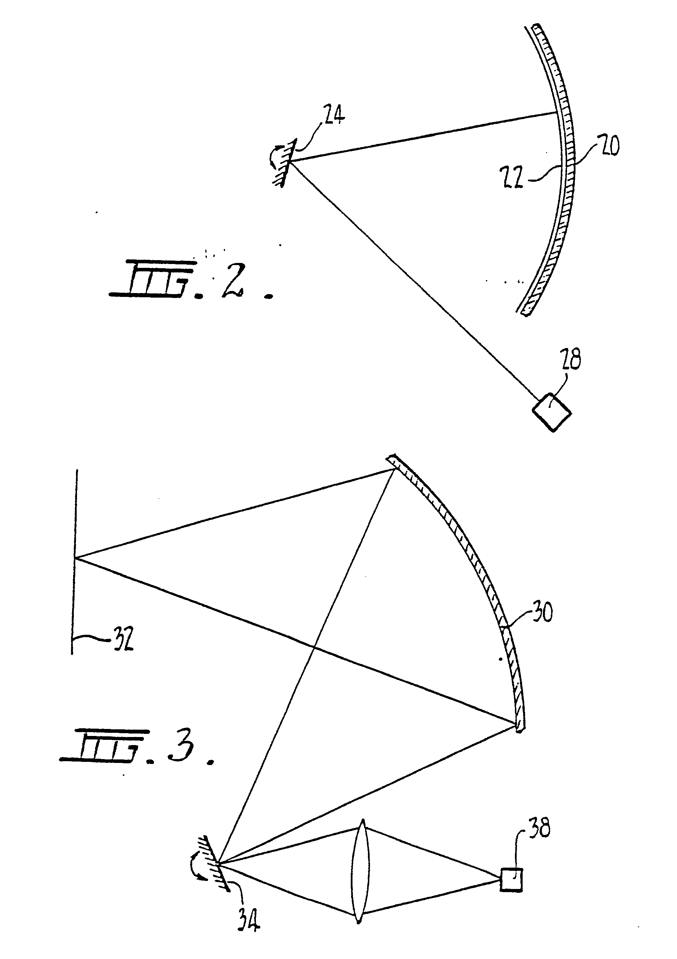

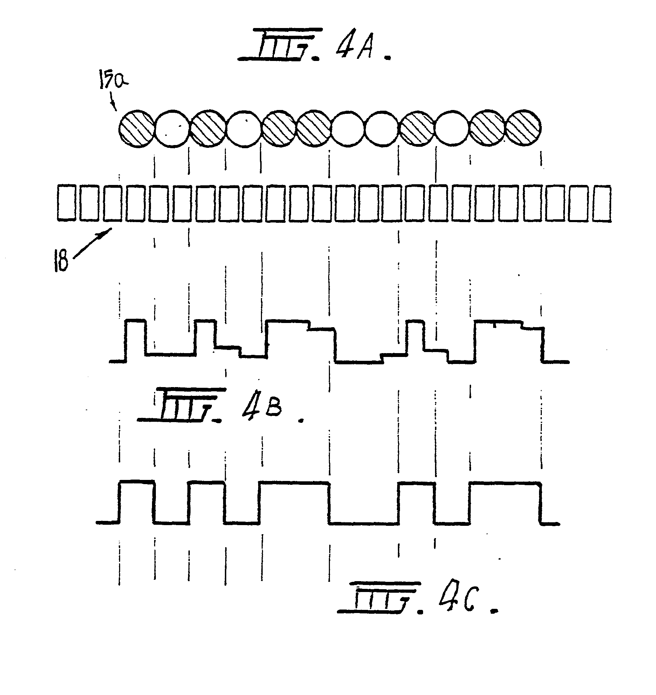

Two alternative scanning techniques applicable only to optically observable record frames such as in microfiche or microfilm, both utilizing rotating mirrors are depicted diagrammatically in Figures 2 and 3. In the Figure 2 arrangement, a cylindrically curved mirror 20 is disposed so that a selected record frame of a medium in a holder 22 lies on the face of the mirror 20. Mirror 20 is either stationary (as it might be with microfilm) or is moveable in a direction parallel to its axis of curvature (as it might be with microfiche). A further mirror 24 is mounted substantially at the axis of the curvature of cylindrical mirror 20 for rotation about an axis parallel to the axis of curvature of mirror 20. In this manner, optical paths are successively provided between the record frames of a channel and an array of detector elements 28. Mirror 24 might sweep over the angle subtended by the medium at the axis of the rotatable mirror. Mirror 24 would typically sweep up and down in a simple harmonic or linear fashion so that all frames in each channel could be observed.

In the Figure 3 arrangement, a spherical or paraboloidal concave mirror 30 is disposed to face the record frames of the medium in a holder 32. A further smaller mirror 34 is mounted substantially at the focus of concave mirror 30 for rotation about at least one axis. Mirror 34 may rotate about both of two perpendicular axes: rotation about one axis would select channels, while rotation about the other axis would cause light from successive frames of the selected channel to fall on a stationary optical detector array 38.

A particular application of the latter scanning arrangement would employ a stationary spherical mirror of a circumference slightly larger than

$$\Pi\sqrt{W^2 + (l/2)^2}$$

where W and l are respectively the width and length of the microfiche constituting the storage medium. The radius of curvature of this mirror would be selected in accordance with dimensions of the reading equipment and with resolution or depth of field criteria. The circumference of the mirror would lie in a plane parallel to the plane of the microfiche, which would be held against another flat mirror. The microfiche is then positioned so that the axis of the stationary spherical mirror does not pass through the microfiche, but all light rays passing therethrough in a direction perpendicular to its surface would strike the stationary spherical mirror. The rotating mirror, at the centre of focus of the stationary mirror, can then direct a light beam if intersected onto any part of the microfiche, while light rays from any particular part of the microfiche can be redirected by the moving mirror to a stationary detector. Since a large portion (almost half) of a stationary spherical mirror would not be used, such part could be omitted.

The respective arrays of detector elements 18, 28, 38 of each of the above techniques develops a set of observed values for each frame represented by the states and/or outputs of the detector elements. The elements are coupled to compensation circuitry effective to correct for any misregistration between the bits and the detector elements. As discussed, one form of such misregistration is fractional misregistration, in which at least some of the detector elements are positioned to observe more than one of the bits. It is this aspect of the invention which will now be discussed in detail. Essentially, it is proposed to utilize the known limitations on the range of possible values to derive from the observed values for each frame a set of modified values indicating record entries of the frame. In the particular case at hand, the "possible values" are limited to the binary numbers 1 and 0.

Reference is first made to the case of serial observation of the bits of each record frame. At any one point in time, only the output corresponding to one bit or a fraction of a bit is available. The data in a whole frame is obtained from a sequence in time of observed values which refer to points along the frame as displacement relative to one end steadily increases.

According to a first embodiment of this aspect of the invention, outputs from successively positioned detector elements are successively presented at regular intervals. The aforementioned modified values, while being restricted to values representing only the possible values 1 and 0, are produced at times which vary from the times of presentation of the detector element outputs in a way which reflects the magnitudes of the detector outputs. The method relies on the fact that a detector element observing part of a bit, typically a spot(s) or transition, will have an output lower than one observing spot centrally or observing a continuous section where a particular degree of opacity prevails. If that lower output is converted to a delay, from the time when that detector element output is presented to the time when the output changes from a 1 to a 0 or vice versa, then a smaller number of detector elements per mit can be used. Transitions from 1 to 0 are delayed in proportion to the difference between the leading detector element output and that corresponding to a 0, and transitions from 0 to 1 are delayed in proportion to the difference between the leading detector element output and that corresponding to a 1. According to one approach, compensation circuit 19, 29, or 39 monitoring the outputs of the detector elements would be arranged to obey the following rules:

(a) If the output was low, corresponding to a "0" bit and the next detector element observed shows an output somewhere between the lowest and highest outputs, then produce a transition from a "0" to a "1", at a time after the output presentation proportional to the difference between the highest output and the output observed. The constant of proportionality should be such that an output or observed value actually at the lowest level (corresponding to a "0") would produce a delay at least until the next observed value was presented, at which time the circuit would be reset.

(b) If the output was high, corresponding to a "1" bit, and the next detector shows an output between the highest and lowest outputs, then delay the transition to a zero for a time proportional to the difference between the observed output and the lowest output. The constant of proportionality would be the same.

The resultant derivation is illustrated in Figures 4A to 4C. Figure 4A shows a frame of record entries, in this case bits represented by two well distinguished degrees of opacity. A linear array of detector elements 18 is brought to an observation position — it will be noted that the spacing of the detector elements is less than that of the bits but that there is no integral ratio involved. The set of observed values is shown in Figure 4B, while Figure 4C depicts the result of applying the derivation rules outlined above: it will be seen that these "modified values" accurately represent bits in the frame.

In a variation of this method, the signal comprising the set of observed values (Figure 4B) is converted to an electrical current the magnitude of which is zero at the lowest observed value, and is proportional to the difference between that value and the currently observed value. This current signal is then employed to charge a capacitor having a capacity chosen so that all outputs corresponding to maximum observed values (e.g. low opacity) are sufficient to charge the capacitor to a predetermined threshold level. Whenever the voltage of capacitor reaches that level, a modified value of 1 is written for 1 detector time, and the capacitor is discharged.

According to a second embodiment of that aspect of the invention concerned with correcting for fractional misregistration, the states and/or outputs of the detector elements are read serially so as to produce a time based analogue signal comprising a set of observed values, and modified values representing the bits of the frame are derived therefrom by a more direct analysis of the analogue signal which relies on each spot or transition being observed by several detector elements or segments.

A novel semiconductor device for reading the detector elements in this manner is depicted in cross-section in Figure 5. A Field-effect transistor layer 40 is sandwiched between, and in electrically conductive contact at respective major faces with, a continuous linear detector 42 and a conductor layer 44. A strip of piezo-electric or like material is disposed in proximity to the lengthwise extending gate of layer 40, so that, on propagation of a wave in material 46, a voltage is generated which opens a moving conductive window in the Field-effect transistor layer 40. Thus, detector 42 can be viewed as an infinite array of detector elements which comprise segments of the detector arranged so that the values observed by each segment can be output separately from the values observed by other segments.

To extract digital data from the signal output at conductor layer 44, the signal might be transmitted directly to high frequency digital communication circuitry as if it were coming over a telephone or co-axial link. Normally, it would not be necessary to de-modulate the signal because of the wide band width (including zero hertz) of the detector. The signal would normally be treated as if it were coming from a modem (modulator/demodulator). In a particular application, derivation of the modified values representing the bits in the frame is effected by employing a universal asynchronous transmitter/receiver (UART). The UART would extract a number of bits of data, typically 7 or 8, from a larger number of bits, typically 10.

In a variation of this second embodiment, the voltage signal from the semiconductor device would be differentiated and rectified before being passed to the UART.

Thus, any change, e.g. from low capacity to high capacity or vice versa, would result in a one bit, while the absence of such a change would correspond to a zero bit.

In a further variation of the second embodiment correcting for fractional misregistration, the analogue detector is simulated by an array of discrete detector elements in which there is a sufficiently large number of elements per frame bit. It is believed that at least 3 to 4 detector elements per bit would be required.

A third embodiment for correcting for fractional misregistration is applicable to static or parallel observations, in which the outputs of all the detector elements of the array are simultaneously available. For this method, the possible values for each record entry are specifically the binary numbers 1 and 0, and the centre-to-centre spacing between detector elements and record entries, as presented to the detector elements, is equal and uniform. The set of modified values representing the record entries is derived in part by serially carrying finite observed values less than a prescribed first threshold, itself substantially less than the observed value representing the possible value 1, for addition to respective, serially ordered, other observed values such that the resultant summations exceed the aforementioned first threshold, but subject to each carried value not exceeding the observed value to which it is added by an amount greater than a second threshold.

An important point is that each detector element output may not necessarily be added to the adjacent output, but may be carried to an output several positions away. This carry and add operation is done when the adjacent detector element has an output substantially corresponding to correct registration with the bit, or two bits whose values correspond to high outputs both observed by the next, or subsequent skipped, detector element.

This further embodiment derivation may be considered to obey the following rules:—

(a) Where a detector element has an output below the aforesaid threshold, generally significantly below the usual maximum output, then that output should be carried forward for addition to the output of a subsequent detector element.

(b) The detector array is then scanned in one direction for another detector element whose output is below another but similarly valued threshold. The carried output is then added to that of the second detector element.

(c) This process must be applied to both directions to yield the greatest possible lattitude with threshold settings and detector sensitivities.

(d) Where the carried value exceeds the output value to which it is added by a determined threshold, the carry direction is incorrect, and the other carry direction should be chosen.

(e) Where a sum of two detectors exceeding a minimum threshold is made, and does not exceed the aforesaid threshold established to identify a one bit, or a 0 bit if high output values correspond to zeroes, then this indicates that the carry direction used to generate the sum is incorrect, and the other carry direction should be chosen.

A particular implementation of the derivation method according to this third embodiment can be used to illustrate the operation of the method. Suppose an optical medium such as microfilm or microfiche is used to store bits in the general format already described, and that each bit is represented by a spot. Suppose further that a transparent spot providing light to a detector represents a 1 bit, while opacity represents a 0 bit.

If the medium is misregistered with reference to the detector elements by half the spacing between spot centers, and this spacing, as presented to the detector elements, equals the detector spacing, each detector will observe two halves of two adjacent spots. Then a bit sequence along a frame of 001001110 will result in detector outputs (observed values) of 0,0,.5,.5,0,0.5,1,1,0.5, if the maximum detector output is adjusted to be one. The analogue carry of the first 0.5 value will be to the adjacent 0.5 value and will result in a one bit being observed in the 4th detector element assuming carry is to the right (increasing number of detector elements). However, the carry of the 6th detector element will be to the 9th element, resulting in a one bit in that position. Thus detector elements 4,7,8, and 9 will record one bits. A carry in the opposite direction would result in detectors 3, 6,7, and 8 recording one bits.

If instead, the misregistration is less than half the spacing between spot centers, then values such as 0.8 and 0.2 would be observed. The possibility, due to variations in gain, arises that a 0.8 value may exceed the carry threshold, and be identified as a 1 value in its own right, rather than being carried forward to be added to a subsequent 0.2. This would result in a bit being misplaced. Rule (d), supra, eliminates this possibility.

A fourth embodiment of the invention directed to correction for fractional misregistration is also applicable to static or parallel observation of each frame, but is more especially applicable where there are two or more detector elements in sub-arrays of uniform configuration per record entry. In general, the set of modified values representing the record entries is derived by ignoring observed values for detector elements at one or more corresponding positions in all the sub-arrays when a predetermined proportion of such elements give observed values sufficiently different from those corresponding to the possible values. Such possible values are typically the binary numbers 1 and 0.

In this method, the detector is considered as a sequence of n-tuples of detector elements such as pairs or triples of detector elements. If a sufficient number of detector elements in a corresponding position in each n-tuple produce output (observed) values sufficiently below the maximum, then the outputs of those detector elements are ignored, and the bit values are determined from other detector elements in the n-tuples.

A particular arrangement according to this fourth embodiment has detectors spaced at half the bit spacing, (after any optical magnification) of spots forming record entries on an optical medium. Thus a spot could illuminate exactly two detectors, or could fully illuminate one detector and half illuminate the two adjacent detector elements. In the latter case, whenever the bits being observed were not all of the same value (0 or 1), at least one detector element would be half illuminated. By discarding the output from that detector element and all detector elements spaced an even number of elements from it, only detector elements which received full illumination for a 1 bit (assuming bits valued 1 are represented by low opacity), would be used to determine bit values.

Where a spot illuminates a smaller fraction of a detector (say 0.2 of it), threshold values could be used to determine whether this is a ground for rejection of that detector output and others in that position within the other n-tuples.

A fifth embodiment for correcting for fractional misregistration may be employed where the possible values for the record entries are limited to the binary numbers 1 and 0, and where the detector elements are an integral multiple n, including $n = 1$, of the record entries. In accordance with this embodiment, the set of modified values representing each frame is derived by effecting small changes of the apparent positions of the record entries relative to the array of detector elements until a set of substantially only 1 and 0 values is obtained.

Thus detector outputs are only accepted when no partial outputs are observed. The required relative movements can be achieved by physical vibration of the detector, or the medium, or by recording each bit as a bar at a specified angle to the direction of the normal direction of the medium relative to the detector. Such bars would extend along the channel but vary in position with reference to the side boundaries of the channel.

By way of example, bits may be recorded on an optical medium, not as spots, but as lines aligned at an angle, say 30°, to the direction of motion of the detector head with respect to the medium i.e. along the channel. The lines would have a thickness approaching their spacing between centre when measured along the frame (perpendicular to the channel), for optimum packing density. Suppose 0 bits are represented by opacity, and one bits are represented by lines of light, and that the detector element spacing along the frame matches the line spacing along the frame. Then a light might begin by illuminating two detector elements but as the detector head moved along the channel, the line would at some point, provided it was long enough, illuminate only one detector element. When this condition was detected by an absence of output values part way between the output value for a 0 bit and the output value for a 1 bit, the detector outputs would be sampled, and the bit values determined.

Even when one of the aforedescribed embodiments, all reliant on the limitations on the range of possible values is utilized to derive a set of modified values indicating record entries for each frame, the modified values may be associated with detector elements in a manner which involves integral misregistration. By this is meant misregistration, or "misalignment" by a whole number of detector elements or record entries spacings. The correction of this form of misregistration entails identifying one or more marker patterns among the modified values, and utilizing the marker patterns to derive, from the modified values, an accurate representation of the record entries of the respective frame.

According to a first form of integral misregistration correction, once a sequence of bits which match the bits on the medium is obtained, it is placed in a shift register, and shifted until the known pattern, unable to be replicated in the data, is observed in a particular sequence of bits.

In an exemplary method the data is coded so that each subsection of it must have at least one bit set to a 1. Then a pattern consisting of a sequence of 0 bits, longer than any such subsection, may be used as a marker to identify a particular part of the respective frame. This part may be the start, or end, or some position within the sequence. In this way, the marker pattern is utilised to assign positions and hence significance to the record entries independently of the detector element(s) used to observe them. Naturally, a binary complement of this arrangement, in which data subjections contain at least one 0 and the pattern consists of all 1 bits, could be used. Also, two or more occurrences of the same pattern, or two or more different patterns, could be used as a single or multiple markers.

According to a second form of integral misregistration correction, where detector elements in a linear array are successively or serially observed, the known marker pattern may be detected by counting successive bits until a bit is observed which does not match the pattern or until the count of matching bits reaches the length of the pattern.

By way of example, consider the case where all bits in the known pattern have the same value. As successive bits are detected, a counter or electronic shift register increments if the bit detected was of that value, and resets if not. When the counter reached a certain value equal to the length of the known pattern, the pattern would be deemed to be observed.

When, instead, bits of both values (0 and 1) were used in the pattern, the counter would be incremented when a bit corresponding to the first bit value was observed. Thereafter, bits would be compared with bit values selected by the count. A match would result in a further increment to the counter, and a difference would result in the counter being reset. The selection could be arranged by reference to a memory indexed by the counter value, or by the value of a binary identification circuit directly connected to the device(s) storing the counter value. A more specific arrangement would use the value of a particular bit in the counter as the required bit, or the complement of the required bit.

To exemplify these principles, reference is made to Figures 4A to 4C. The set of modified values represented in Figure 4C commences with the pattern 1010 which is not replicated in the rest of the set. If the apparatus has been informed that 1010 is a marker pattern indicating the start of data, or more specifically that the data commences with the next bit, it will be able to locate the residual modified values as an accurate representation of the frame and thereby correct for the random misregistration by whole detector element spacings. This might be done by counting the modified values as outlined above. When a count of 4 is reached, the marker pattern will have been identified.

In some cases, it may be necessary to make provision to correct for physical expansion or contraction of the medium in which the information is stored, or of the spacing between the detector elements, or of the detector where elements are defined by a continuous detector, or of changes in magnification of light from optical media.

With optical media, this could be overcome by automatic changes to the magnification, arranged by electrically driven assemblies which move the optical system relative to the medium and detector, or the detector or the medium relative to the other components.

A particular arrangement of this method could be to mount a lens system on a threaded rod or rods which were rotated by electric motors under control of the computer system receiving the data read from the medium, achieving a small linear movement parallel to the axis of the threaded rods, which axis would be parallel to the primary ray passing through the optical system.

Alternatively methods apply to the Dynamic/Serial methods of overcoming fractional bit spacing misregistrations. A first method would be to adjust the clock frequency governing sampling of data as it was produced, as observed values, by the detector system. An increase in the size of the storage medium (after magnification) relative to the detector element spacing, could be compensated by increasing the time between successive sampling of the observed values.

By way of example, this method might use a voltage controlled oscillator or pulse generator and entail changing the controlling voltage by loading a digital to analogue converter from the computer receiving the data, or by allowing this computer to increment or decrement the voltage with positive and negative charge-pumps connected to the capacitor in a sample-and-hold circuit.

Another method applicable to Dynamic/Serial reading techniques is to reduce the number of bits over which time must be correct to less than the number of bits in a frame. This would allow long frames offering high packing density, and would still allow some accommodation of size change.

An example of this method is to introduce (self) clocking information into the data recorded on the medium. Alternatively, one might use phase-encoding methods, where each bit position is indicated by a transition in one direction, and the value at the bit is determined by the delay from that transition to a transition in the reverse direction. A still further approach might be to record data on the frame in n-tuples beginning with a bit of known value. When this bit is detected, a clock is started and $n - 1$ or fewer bit values are sampled at subsequent clock pulses. Thus the clock need only be accurate over n bits. If, for example, a variation of 40% of a bit time could be allowed in the sample time relative to the start of a bit and n was chosen to be 10, a 4% change in size or magnification could be accommodated without adjustment of clocks or optical systems. An additional advantage of this method is that the known pattern used to identify the start (or other position) of a frame could be a pattern of bits whose values were all opposite to the value of the first bit of each data n-tuple.

**Claims**

1. A method of reading information stored in a medium (10) as multiple machine readable record entries arranged in frames which are themselves arranged in one or more channels (14) which record entries are indicative of values from a limited set of possible values, comprising: observing each frame (15) in turn with a substantially known array (16) of detector elements each having a limited field of observation such that each record entry is at least partly within the field of observation of at least one detector element, thereby to produce a first set of observed values (Figure 4B) for each frame represented by the states and/or outputs of the detector elements; deriving from the first set of observed values a second set of values (Figure 4C), each being one of said possible values, representing record entries of the frame (15); and, utilising the observations by the array of detector elements to identify one or more marker patterns from which correction for integral misregistration between the record entries and the detector elements is derived; characterised in that: each detector element responds to each record entry within its field of observation in relation to the fraction of the record entry within the field of observation; and, in deriving the second set of values (Figure 4C), the first set of observed values (Figure 4B) relating to the record entries are manipulated utilising the limitations on the range of said possible values so that at least those observed values of the first set ascertained not to be equal to said possible values are modified to become one of said possible values and correct for any fractional misregistration between the record entries and the detector elements.

2. A method according to claim 1 further characterized in that the array (16) of detector elements utilized is of substantially greater span than each record frame (15) and simultaneously observes all the record entries of each frame in turn, and wherein said observed values are stored and serially read for said deriving step so that the time at which a value is read bears a known relationship to the position of the respective detector element along the array (16).

3. A method according to claim 2 further characterized in that successive small segments of a continuous linear detector are read by directing a wave along the detector whereby to develop a moving conductive window between the detector and a more conductive layer which serves to transport the stored value to the output.

4. A method according to claim 3 further characterized in that the wave is propagated in a material such as piezo-electric material (46) which generates a voltage in response to the wave, which voltage, when applied to the gate of a continuous layer of Field-effect transistor material (40), opens the moving conductive window.

5. A method according to claim 1 or 2 further characterized in that said record entries are equispaced in a first linear array (15) and the detector elements are equispaced in a second linear array (16).

6. A method according to claim 1 further characterized in that the array (16) of detector elements utilized is defined by one or more detectors which are arranged to observe successive spatial positions in respect to which they form transitory detector elements.

7. A method according to claim 1 further characterized in that outputs from successively positioned detector elements are successively presented at regular intervals, and said modified values, while being restricted to values representing only said possible values, are produced at times which vary from the times of presentation of the detector element outputs in a way which reflects the magnitudes of the detector element outputs.

8. A method according to claim 7 further characterized in that the variation in the time of transition from each modified value to the next, with reference to the presentation of the related detector element outputs, is proportional to the difference between these outputs and predefined levels.

9. A method according to claim 8 further characterized in that said possible values are the binary numbers 1 and 0, transitions from 1 to 0 are delayed in proportion to the difference between the leading detector element output and that corresponding to a 0, and transitions from 0 to 1 are delayed in proportion to the difference between the leading detector element output and that corresponding to a 1.

10. A method according to claim 1 further characterized in that the states and/or output of the detector elements are read serially so as effectively to produce a time-based analog signal comprising said set of observed values, and in that said second set of values is derived therefrom by extracting, from said analog signal, a set of modified values corresponding to the binary numbers 1 and 0, by use of digital communications circuitry.

11. A method according to claim 1 further characterized in that said record entries are equispaced in a first linear array and the array of detector elements are equispaced in a second linear array, and in that detector element outputs are presented sequentially at regular intervals according to their position in the linear array, the number of detector elements per record entry is greater than one and may or may not be a whole number, and the derivation from the continuously variable signal available from each detector element to that representing a possible value is achieved by sampling the outputs of successive detector elements at times which depend on that output, and by determining the modified value to be that represented by the possible value closest to the detector output being observed.

12. A method according to claim 10 or 11 further characterized in that said derivation of the modified values is effected by employing a universal asynchronous receiver/transmitter (UART).

13. A method according to claim 1 or 2 further characterized in that the possible values are the binary numbers 1 and 0, the centre-to-centre spacings between detector elements and between record entries, as presented to the detector elements, are respectively equal and uniform, and in that the second set of values is derived in part by carrying intermediate values substantially different from the maximum and minimum detector element output values, for addition to other intermediate values.

14. A method according to claim 1 further characterized in that said record entries are equispaced in a first linear array and the detector elements are equispaced in a second linear array, and in that there are two or more detector elements in sub-arrays of uniform configuration per record entry, and the second set of values is derived by ignoring observed values for detector elements at one or more corresponding positions in all the sub-arrays, when a predetermined proportion of such elements give observed values sufficiently different from those corresponding to said possible values.

15. A method according to claim 14 further characterized in that said possible values are the binary numbers 0 and 1.

16. A method according to claim 1 or 2 further characterized in that the possible values are the binary numbers 1 and 0, the detector elements are an integral multiple n, including n = 1, of the record entries, each frame is repeatedly observed as the position of the record entries relative to the array of detector elements is changed, and the second set of values is derived by selecting or sampling an observation in which the observed values are each substantially one of said possible values.

17. A method according to claim 16 further characterized in that the record entries are arranged in the medium such that their apparent positions relative to the array of detector elements varies as the array moves parallel to the channel containing the record entries.

18. A method according to claim 1 or 2 further characterized in that the record entries are optically scannable zones of variable or varying opacity.

19. A method according to claim 18 further characterized in that the medium is a microfiche.

20. A method according to claim 1 or 2 further characterized by identifying the one or more marker patterns among the second set of values, and utilizing the marker pattern(s) to derive from the second set of values, an accurate representation of the record entries of the frame, said marker pattern(s) being unable to be replicated in the data and identifying the start and/or end of the respective frames, and the marker pattern(s) being utilized to assign positions and hence significance to the record entries independently of the detector element(s) used to observe them.

21. A method according to claim 20 further characterized in that the possible values are the binary numbers 1 and 0, data bits derived from the observed values are stored in an electronic shift register and shifted until the known patterns fall in certain bit positions connected to a binary identification circuit.

22. A method according to claim 21 further characterized in that the states and/or output of the detector elements are read serially, data bits (1 and 0) derived from the observed values are moved into a shift register serially, and complete data extraction occurs when the marker pattern reaches the part of the shift register connected to the binary identification circuit.

23. A method according to claim 20, further characterized in that the possible values are the binary numbers 1 and 0, the states and/or output of the detector elements are read serially, data bits (1 and 0) derived from the observed values are entered into a detection circuit which blocks the system attempting to acquire the data until one or more of the known patterns is detected.

24. Apparatus for reading information stored in a medium (10) as multiple machine readable record entries arranged in frames which are themselves arranged in one or more channels (14) which record entries are indicative of values from a limited set of possible values, comprising:

a holder (12) to temporarily support or retain said medium (10);

a substantially known array (16) of detector elements movable relative to said holder (12), each element having a limited field of observation;

means (24, 34) to scan each frame (15) with said array (16) such that each record entry is at least partly within the field of observation of at least one detector element to produce a first set of observed values (Figure 4B) for each frame represented by the state and/or output of the detector elements; and

means arranged to receive the respective sets of observed values and to derive from the observed values for each frame a second set of values (Figure 4C), each being one of said possible values, representing record entries of the frame (15), said means including means for utilizing the observations by the array (16) of detector elements to identify one or more marker patterns and means for utilizing said marker pattern(s) to correct for integral misregistration between the record entries and the detector elements; characterized in that each detector element in use responds to each record entry within its field of observation in relation to the fraction of the record entry lying within the field of observation; and in that said deriving means, in deriving the second set of values is arranged to manipulate the first set of observed values relating to the record entries, utilizing the limitations on the range of said possible values, so that at least those observed values ascertained not to be equal to possible values are modified to become one of said possible values and correct for any fractional misregistration between the record entries and the detector elements.

25. Apparatus according to claim 24 further characterized in that said array is a linear array (16) of equispaced detector elements.

26. Apparatus according to claim 24 or 25 further characterized in that said scanning means includes a drive (13) arranged to selectively relatively move the array (16) over the medium (10) in either or both of two mutually perpendicular directions, including a direction parallel to the channels (14) of said medium.

27. Apparatus according to claim 26 further characterized in that the drive (13) is arranged to relatively move the array at substantially constant velocity parallel to the channels (14) and perpendicular to the frames (15), but stepwise parallel to the frames (15) and perpendicular to the channels (14).

28. Apparatus according to claim 24 or 25 for optically observing record entries, further characterized in that the scanning means includes a cylindrically curved mirror (20) disposed so that the record frame (15) of a medium (10) in said holder (12) lies on the face of the mirror (20) and a further mirror (20) mounted substantially at the axis of curvature of the cylindrical mirror (20) for rotation about an axis parallel to said axis of curvature, whereby optical paths are successively provided between the record frames (15) of a channel (14) and the array (28) of detector elements.

29. Apparatus according to claim 24 or 25 for optically observing record entries, further characterized in that the scanning means includes a spherical or paraboloidal concave mirror (30) or convex lens disposed to face the record frames (15) of a medium (10) in said holder (12), and a further smaller mirror (34) mounted substantially at the focus of said concave mirror (30) for rotation about at least one axis, whereby optical paths are successively provided between the record frames (15) of a channel (14) and the array (38) of detector elements.

30. Apparatus according to claim 24 further characterized in that said array includes a semiconductor device comprising a Field-effect transistor layer (40) which has one major face in electrically conductive contact with the detector elements (42) and another major face in electrically conductive contact with a juxtaposed conductor layer (44), and a strip of material (46) in proximity to the gate of the Field-effect transistor layer (40) selected whereby on propagation of a wave in said material a voltage is generated which opens a moving conduction window in the Field-effect transistor layer (40).

31. Apparatus according to any one of claims 24 to 30 further characterized in that said deriving means is arranged to derive the second set of values in part by serially carrying finite observed values less than a prescribed first threshold, itself substantially less than the observed value representing the possible value 1, for addition to respective, serially ordered, other observed values such that the resultant summations exceed said first threshold, but subject to each carried value not exceeding the observed value to which it is added by an amount greater than a second threshold.

32. Apparatus according to any one of claims 24 to 30 further characterized in that the deriving means is arranged to ignore observed values for detector elements at one or more corresponding positions in predetermined uniform configuration sub-arrays of the detector elements, when a predetermined proportion of such elements give observed values sufficiently different from those corresponding to said possible values.

33. Apparatus according to any one of claims 24 to 30 further characterized in that said deriving means is arranged to select as said second set of values an observation in which the observed values are each substantially one of said possible values.

**Patentansprüche**

1. Verfahren zum Lesen von Informationen, die in einem Medium (10) in Form von einer Vielzahl von maschinenlesbaren Dateneingaben gespeichert sind, die in Rastern angeordnet sind, welche ihrerseits in einem oder in mehreren Spuren (14) angeordnet sind, wobei die Dateneingaben repräsentativ sind für Werte aus einer begrenzten Menge möglicher Werte, bei dem jedes Raster (15) der Reihe nach mit einer im wesentlichen bekannten Anordnung (16) von Detektorelementen beobachtet wird, von denen jedes ein begrenztes Beobachtungsfeld hat, so daß jede Dateneingabe wenigstens teilweise innerhalb des Beobachtungsfeldes von wenigstens einem Detektorelement liegt, wodurch eine erste Menge beobachteter Werte (Fig. 4B) für jedes Raster erzeugt wird, repräsentiert durch die Zustände und/oder Ausgänge der Detektorelemente; daß von der ersten Menge beobachteter Werte eine zweite Menge von Werten (Fig. 4C) abgeleitet wird, wobei jede Wertmenge einen der möglichen Werte darstellt, welche Dateneingaben des Rasters (15) repräsentieren; wobei die Beobachtungen durch die Detektorelementanordnung verwendet wird, um eine oder mehrere Markierungsmuster zu identifizieren, aus welchen eine Korrektur für eine fehlerhafte Überdeckung zwischen den Dateneingaben und den Detektorelementen abgeleitet wird, dadurch gekennzeichnet, daß jedes Detektorelement auf jede Dateneingabe innerhalb seines Beobachtungsfeldes im Verhältnis zum Anteil der Dateneingabe innerhalb des Beobachtungsfeldes anspricht; und daß bei der Ableitung der zweiten Menge von Werten (Fig. 4C) die erste Menge beobachteter Werte (Fig. 4B), die den Dateneingaben entsprechen, unter Verwendung der Begrenzung des Bereiches der möglichen Werte manipuliert wird, so daß wenigstens die beobachteten Werte der ersten Menge, die als nicht gleich zu den möglichen Werten festgestellt wurden, modifiziert werden, um ein Wert der möglichen Werte zu werden und jede anteilige fehlerhafte Ausrichtung zwischen den Dateneingaben und den Detektorelementen zu korrigieren.

2. Verfahren nach Anspruch 1, dadurch gekennzeichnet, daß die Anordnung (16) von verwendeten Detektorelementen eine wesentlich größere lichte Weite als jedes Datenraster (15) aufweist und gleichzeitig alle Dateneingaben jedes Rasters abwechselnd beobachtet, und bei dem die beobachteten bzw. erfaßten Werte gespeichert und seriell für die Ableitung der Werte gelesen werden, so daß die Zeit, zu welcher ein Wert gelesen wird, eine bekannte Beziehung zu der Position des zugehörigen Detektorelementes entlang der Anordnung (16) einnimmt.

3. Verfahren nach Anspruch 2, dadurch gekennzeichnet, daß aufeinanderfolgende kleine Segmente eines ununterbrochenen, linearen Detektors dadurch gelesen werden, daß eine Welle entlang des Detektors gerichtet wird, wodurch ein sich bewegendes leitfähiges Fenster zwischen dem Detektor und einer noch leitfähigeren Schicht erzeugt wird, die dazu dient, den gespeicherten Wert zum Ausgang zu transportieren.

4. Verfahren nach Anspruch 3, dadurch gekennzeichnet, daß die Welle in einem Material, beispielsweise einem piezoelektrischen Material (46) fortgepflanzt wird, welches eine Spannung abhängig von der Welle erzeugt, wobei die Spannung nach Anlegen an die Gate-Elektrode einer nicht unterbrochenen Schicht eines Feldeffekttransistormaterials (40) das sich bewegende leitfähige Fenster öffnet.

5. Verfahren nach Anspruch 1 oder 2, dadurch gekennzeichnet, daß die Dateneingaben mit gleichem Abstand auf einer ersten linearen Anordnung bzw. Reihe (15) vorgesehen sind und daß die Detektorelemente in einer zweiten linearen Anordnung bzw. Reihe (16) mit gleichem Abstand vorgesehen sind.

6. Verfahren nach Anspruch 1, dadurch gekennzeichnet, daß die Anordnung (16) von benutzten Detektorelementen durch einen oder mehrere Detektoren definiert ist, die so angeordnet sind, daß sie aufeinanderfolgende räumliche Positionen beobachten, in Abhängigkeit von welchen sie vorübergehend auftretende Detektorelemente bilden.

7. Verfahren nach Anspruch 1, dadurch gekennzeichnet, daß die Ausgänge von aufeinanderfolgende angeordneten Detektorelementen in regelmäßigen Intervallen aufeinanderfolgend dargestellt werden, und daß die modifizierten Werte, die auf Werte begrenzt werden, welche nur die möglichen Werte darstellen, an Zeiten erzeugt werden, die sich von denjenigen Zeiten der Präsentation der Detektorelement-Ausgänge in einer Weise unterscheiden, welche die Größen der Detektorelementausgänge wiedergeben.

8. Verfahren nach Anspruch 7, dadurch gekennzeichnet, daß die Änderung der Zeit eines Übergangs von jedem modifizierten Wert auf den nächsten bezüglich der Präsentation der zugeordneten Detektorelement-Ausgänge proportional ist zum Unterschied zwischen diesen Ausgängen und den vorgegebenen Werten.

9. Verfahren nach Anspruch 8, dadurch gekennzeichnet, daß die möglichen Werte die Binärzahlen 1 und 0 sind, daß die Übergänge von 1 auf 0 im Verhältnis zur Differenz zwischen dem vorderen Detektorelement-Ausgang und dem entsprechenden auf 0 verzögert werden, und daß die Übergänge von 0 auf 1 im Verhältnis zur Differenz zwischen dem vorderen Detektorelement-Ausgang und dem einer 1 entsprechenden Ausgang verzögert werden.

10. Verfahren nach Anspruch 1, dadurch gekennzeichnet, daß die Zustände und/oder der Ausgang der Detektorelemente seriell gelesen werden, so daß ein zeitbezogenes Analogsignal erzeugt wird, welches die Menge von beobachteten Werten enthält, und daß die zweite Menge von Werten davon abgeleitet wird, daß von dem Analogsignal eine Menge modifizierter Werte durch Verwendung einer digitalen Kommunikationsschaltung herausgezogen werden, welche den binären Zahlen 1 und 0 entsprechen.

11. Verfahren nach Anspruch 1, dadurch gekennzeichnet, daß die Dateneingaben in einer ersten linearen Reihe bzw. Anordnung mit gleichen Abständen vorgesehen sind und daß die Reihe bzw. Anordnung von Detektorelementen in einer zweiten linearen Reihe mit gleichen Abständen vorgesehen sind, und daß die Detektorelement-Ausgänge sequentiell in regelmäßigen Intervallen entsprechend ihrer Position in der linearen Reihe präsentiert werden, daß die Zahl der Detektorelemente je Dateneingabe größer als eins ist und eine ganze Zahl sein kann oder nicht, und daß die Ableitung von dem kontinuierlich variablen Signal, das von jedem Detektorelement verfügbar ist, zu demjenigen, welches einen möglichen Wert repräsentiert, durch Abtasten der Ausgänge aufeinanderfolgender Detektorelemente zu Zeitpunkten erreicht wird, die von dem Ausgang abhängen und dadurch, daß der modifizierte Wert als derjenige bestimmt wird, der durch den möglichen Wert repräsentiert wird, der dem beobachteten Detektorausgang am nächsten ist.

12. Verfahren nach Anspruch 10 oder 11, dadurch gekennzeichnet, daß die Ableitung der modifizierten Werte durch Verwendung edines universellen Asynchronempfängers/-senders (UART) ausgeführt wird.

13. Verfahren nach Anspruch 1 oder 2, dadurch gekennzeichnet, daß die möglichen Werte die binären Zahlen 1 und 0 sind, daß die Abstände von Zentrum zu Zentrum zwischen den Detektorelementen und zwischen den Dateneingaben, wie sie den Detektorelementen präsentiert werden, jeweils gleich und gleichförmig sind und daß die zweite Menge bzw. der zweite Satz von Werten teilweise dadurch abgeleitet wird, daß Zwischenwerte, die wesentlich unterschiedlich von den maximalen und minimalen Detektorelement-Ausgangswerten sind, zur Addition zu anderen Zwischenwerten geführt werden.

14. Verfahren nach Anspruch 1, dadurch gekennzeichnet, daß die Dateneingaben mit gleichem Abstand in einer ersten linearen Reihe und die Detektorelemente mit gleichem Abstand in einer zweiten linearen Reihe angeordnet werden und daß zwei oder mehr Detektorelemente in Unter-Reihen mit gleichmäßiger Konfiguration zur Dateneingabe vorhanden sind, und daß die zweite Menge von Werten dadurch abgeleitet wird, daß beobachtete Werte für Detektorelemente an einem oder an mehreren entsprechenden Positionen in allen Unter-Reihen ignoriert werden, wenn ein vorbestimmter Abschnitt solcher Elemente beobachtete Werte liefert, die ausreichend unterschiedlich sind von jenen, die den möglichen Werten entsprechen.

15. Verfahren nach Anspruch 14, dadurch gekennzeichnet, daß die möglichen Werte die Binärzahlen 0 und 1 sind.

16. Verfahren nach Anspruch 1 oder 2, dadurch gekennzeichnet, daß die möglichen Werte die Binärzahlen 1 und 0 sind, daß die Detektorelemente ein ganzzahliges Vielfaches von n einschließlich $n = 1$ der Dateneingaben darstellen, daß jedes Raster wiederholt beobachtet wird, wenn sich die Position der Dateneingaben gegenüber der Reihe von Detektorelementen ändert und daß die zweite Menge von Werten dadurch abgeleitet wird, daß eine Beobachtung ausgewählt oder abgetastet wird, in welcher die beobachteten Werte jeweils im wesentlichen einen der möglichen Werte darstellen.

17. Verfahren nach Anspruch 16, dadurch gekennzeichnet, daß die Dateneingaben in bzw. auf einem Medium angeordnet sind, derart, daß deren scheinbare Positionen relativ zur Reihe der Detektorelemente sich verändert, wenn die Reihe sich parallel zu der Spur bewegt, welche die Dateneingaben enthält.

18. Verfahren nach Anspruch 1 oder 2, dadurch gekennzeichnet, daß die Dateneingaben optisch abtastbare Zonen mit variabler oder sich variierender Opazität darstellen.

19. Verfahren nach Anspruch 18, dadurch gekennzeichnet, daß das Medium ein Mikrofiche ist.

20. Verfahren nach Anspruch 1 oder 2, dadurch gekennzeichnet, daß das eine oder die mehreren Markierungsmuster der zweiten Menge von Werten identifiziert wird bzw. werden, daß das bzw. die Markierungsmuster verwendet werden, um von der zweiten Menge von Werten eine genaue Repräsentation der Dateneingaben des Rasters abzuleiten, daß das bzw. die Markierungsmuster nicht in den Daten nachgebildet werden können und den Start und/oder das Ende der zugehörigen Raster identifizieren, und daß das bzw. die Markierungsmuster verwendet werden, um Positionen zu bestimmen und demzufolge die Bedeutung gegenüber den Dateneingaben unabhängig von dem bzw. den zu deren Beobachtung verwendeten Detektorelement(en).

21. Verfahren nach Anspruch 20, dadurch gekennzeichnet, daß die möglichen Werte die Binärzahlen 1 und 0 darstellen, daß Datenbits, die von den beobachteten bzw. erfaßten Werten abgeleitet werden, in einem elektronischen Schieberegister gespeichert werden und verschoben werden, bis die bekannten Muster in bestimmte Bitpositionen fallen, die mit einer binären Identifikationsschaltung verbunden sind.

22. Verfahren nach Anspruch 21, dadurch gekennzeichnet, daß die Zustände und/oder der Ausgang der Detektorelemente seriell gelesen werden, daß Datenbits (1 und 0), die von den beobachteten bzw. erfaßten Werten abgeleitet sind, seriell in ein Schieberegister geführt werden und daß eine vollständige Datenextraktion auftritt, wenn das Markierungsmuster den Teil des Schieberegisters erreicht, der mit dem binären Identifizierungsschaltkreis verbunden ist.

23. Verfahren nach Anspruch 20, dadurch gekennzeichnet, daß die möglichen Werte die binären Zahlen 1 und 0 sind, daß die Zustände und/oder die Ausgänge der Detektorelemente seriell gelesen werden, daß die Datenbits (1 und 0), die von den beobachteten Werten abgeleitet sind, in eine Detektorschaltung eingegeben werden, welche das System daran hindert, die Daten zu erfassen, bis ein oder mehrere der bekannten Muster erfaßt sind.

24. Vorrichtung zum Lesen von Informationen, die in bzw. auf einem Medium (10) in Form einer Vielzahl von maschinenlesbaren, in Rastern angeordneten Informationen gespeichert sind, wobei die Raster selbst in einen oder mehreren Spuren (14) angeordnet sind, wobei die Informationen bzw. Dateneingaben indikativ sind für die Werte einer begrenzten Menge von möglichen Werten, nach Anspruch 1, mit einem Halter (12) zur zeitweiligen Halterung bzw. Stützung des Mediums (10);

mit einer im wesentlichen bekannten Anordnung bzw. Reihe (16) von Detektorelementen, die gegenüber der Halterung (12) bewegbar sind, wobei jedes Element ein begrenztes Beobachtungsfeld hat;

mit Mitteln (24, 34) zum Abtasten jedes Rasters (15) mit der Reihe (16), derart, daß jede Dateneingabe bzw. Information wenigstens teilweise innerhalb des Beobachtungsfeldes von wenigstens einem Detektorelement liegt, um eine erste Menge beobachteter Werte (Fig. 4B) für jedes Raster zu erzeugen, das durch den Zustand und/oder Ausgang der Detektorelemente repräsentiert wird, und

mit Mitteln, die so angeordnet sind, daß sie die zugehörigen Mengen beobachteter Werte empfangen und von den beobachteten Werten für jedes Raster eine zweite Menge von Werten (Fig. 4C) ableiten, von denen jeder einer der möglichen Werte ist, welche Dateneingaben des Rasters (15) repräsentieren, wobei die Mittel weitere Mittel enthalten, um die Beobachtungen durch die Reihe (16) von Detektorelementen zur Identifizierung eines oder mehrerer Markierungsmuster zu verwenden, sowie weitere Mittel enthält, um das oder die Markierungsmuster zur Korrektur einer wesentlichen bzw. vollständigen Fehlausrichtung zwischen den Dateneingaben und den Detektorelementen zu benutzen,

dadurch gekennzeichnet, daß jedes Detektorelement während seines Betriebs auf jede Dateneingabe innerhalb seines Beobachtungsfeldes in Bezug auf den Teil der Dateneingabe anspricht, die innerhalb des Beobachtungsfeldes liegt; und daß die Ableitungseinrichtung während des Ableitens der zweiten Menge von Werten so angeordnet ist, um die erste Menge von beobachteten Werten bezüglich der Dateneingaben zu manipulieren, wobei die Begrenzungen auf den Bereich von möglichen Werten benutzt werden, so daß wenigstens diejenigen beobachteten Werte, die als nicht gleich mit den möglichen Werten ermittelt wurden, modifiziert werden, um einen der möglichen Werte darzustellen und um jede teilweise Fehlausrichtung zwischen den Dateneingaben und den Detektorelementen zu korrigieren.

25. Vorrichtung nach Anspruch 24, dadurch gekennzeichnet, daß die Reihe eine lineare Reihe (16) von in gleichem Abstand beabstandeten Detektorelementen ist.

26. Vorrichtung nach Anspruch 24 oder 25, dadurch gekennzeichnet, daß die Abtasteinrichtung einen Antrieb (13) aufweist, der zur selektiven, relativen Bewegung der Reihe (16) über das Medium (10) in einer oder in beiden von zwei zueinander senkrechten Richtungen einschließlich einer Richtung, die parallel zu den Kanälen bzw. Spuren (14) des Mediums liegt, angeordnet ist.

27. Vorrichtung nach Anspruch 26, dadurch gekennzeichnet, daß der Antrieb (13) angeordnet ist, um die Reihe mit im wesentlichen konstanter Geschwindigkeit parallel zu den Spuren (14) und senkrecht zu den Rastern (15), jedoch stufenweise parallel zu den Rastern (15) und senkrecht zu den Spuren (14) zu bewegen.

28. Vorrichtung nach Anspruch 24 oder 25 zur optischen Beobachtung von Dateneingaben, dadurch gekennzeichnet, daß die Abtasteinrichtung einen zylindrisch gebogenen Spiegel (20) aufweist, der derart angeordnet ist, daß das Speicherraster (15) eines Mediums (10) in dem Halter (12) auf der Vorderseite des Spiegels (20) und eines weiteren Spiegels (24) liegt, wobei der weitere Spiegel (24) im wesentlichen auf der Achse des Krümmungsmittelpunktes des zylindrischen Spiegels (20) liegt zur Drehung um eine Achse parallel zur im Krümmungsmittelpunkt liegenden Achse, wodurch optische Wege aufeinanderfolgend zwischen den Datenrastern (15) einer Spur (14) und der Reihe (28) von Detektorelementen gebildet sind.

29. Vorrichtung nach Anspruch 24 oder 25 zur optischen Beobachtung von Dateneingaben, dadurch gekennzeichnet, daß die Abtasteinrichtung einen sphärischen oder parabolförmigen konkaven Spiegel (30) oder eine konvexe Linse enthält, der bzw. die derart angeordnet sind, daß sie auf die Datenraster (15) eines Mediums (10) in der Halterung (12) weisen, und daß ein weiterer kleinerer Spiegel (34) im wesentlichen im Brennpunkt des konkaven Spiegels (30) zur Drehung um wenigstens eine Achse vorgesehen ist, wodurch optische Wege aufeinanderfolgend zwischen den Datenrastern (15) einer Spur (14) und der Reihe (38) von Detektorelementen geschaffen werden.

30. Vorrichtung nach Anspruch 24, dadurch gekennzeichnet, daß die Reihe eine Halbleitereinrichtung enthält, die eine Feldeffekttransistorschicht (40) aufweist, die eine größere Fläche in elektrisch leitfähigem Kontakt mit den Detektorelementen (42) und eine weitere größere Fläche in elektrisch leitfähigem Kontakt mit einer daneben liegenden Leiterschicht (44) hat, daß ein Streifen des Materials (46) in der Nähe des Gate der Feldeffekttransistorschicht (40) gewählt ist, wodurch bei einer Fortpflanzung einer Welle in dem Material eine Spannung erzeugt wird, die ein sich bewegendes leitfähiges Fenster in der Feldeffekttransistorschicht (40) öffnet.

31. Vorrichtung nach einem der Ansprüche 24 bis 30, dadurch gekennzeichnet, daß die Ableitungseinrichtung so angeordnet ist, daß sie die zweiten Menge von Werten teilweise durch serielles Übertragen endlicher beobachteter Werte, die geringer sind als ein erster vorbestimmter Schwellwert, ableitet, wobei der Schwellwert selbst wesentlich kleiner ist als der beobachtete Wert, welcher den möglichen Wert 1 repräsentiert, zum Zwecke der Addition zu entsprechenden, seriell gereihten anderen beobachteten Werten, derart, daß die resultierenden Summen den ersten Schwellwert überschreiten, aber abhängig sind von jedem übertragenen Wert, der den beobachteten Wert, zu dem er addiert wird, nicht um einen Betrag überschreitet, der größer als der zweite Schwellwert ist.

32. Vorrichtung nach einem der Ansprüche 24 bis 30, dadurch gekennzeichnet, daß die Ableitungseinrichtung so angeordnet ist, daß sie beobachtete Werte für Detektorelemente an einer oder mehreren entsprechenden Positionen in einer vorbestimmten, in gleichmäßiger Konfiguration vorgesehenen Unterreihen von Detektorelementen ignoriert, wenn ein vorbestimmter Bereich bzw. ein vorbestimmtes Verhältnis solcher Elemente Beobachtungswerte liefert, die ausreichend unterschiedlich sind von jenen, die den möglichen Werten entsprechen.

33. Vorrichtung nach einem der Ansprüche 24 bis 30, dadurch gekennzeichnet, daß die Ableitungseinrichtung so angeordnet ist, daß sie als zweite Menge von Werten eine Beobachtung auswählt, in welcher die beobachteten Werte jeweils im wesentlichen einen der möglichen Werte darstellen.

**Revendications**

1. Procédé pour lire des informations stockées sur un support (10) telles que de multiples entrées d'enregistrement pouvant être lues par une machine, disposées en images qui sont elles-mêmes disposées dans un ou plusieurs canaux (14) dont les entrées d'enregistrement sont indicatrices de valeurs faisant partie d'un jeu limité de valeurs possibles, consistant à:

observer chaque image (15) tour à tour au moyen d'un réseau (16) sensiblement connu d'éléments détecteurs dont chacun a un champ d'observation limité et tel que chaque entrée d'enregistrement est comprise au moins en partie dans les limites du champ d'observation d'au moins un élément détecteur, pour produire ainsi un premier jeu de valeurs observées (Figure 4B) pour chaque image, représentées par les états et/ou les sorties des éléments détecteurs; obtenir à partir du premier jeu de valeurs observées un second jeu de valeurs (Figure 4C), chacune étant l'une desdites valeurs possibles, représentant des entrées d'enregistrement de l'image (15); et utiliser les observations réalisées par le réseau d'éléments détecteurs, pour identifier une ou plusieurs configurations de marquage à partir desquelles est obtenue la correction d'un défaut d'alignement intégral entre les entrées d'enregistrement et les éléments détecteurs;

caractérisé en ce que:

chaque élément détecteur répond à chaque entrée d'enregistrement dans les limites de son champ d'observation en rapport avec la fraction de l'entrée d'enregistrement contenue dans le champ d'observation; et, lors de l'obtention du second jeu de valeurs (Figure 4C), le premier jeu de valeurs observées (4B) concernant les entrées d'enregistrement est manipulé en utilisant les limites de la plage desdites valeurs possibles de manière qu'au moins les valeurs qui ont été observées dans le premier jeu et qui ont été constatées comme non égales auxdites valeurs possibles sont modifiées pour devenir l'une desdites valeurs possibles et corrigent tout défaut d'alignement fractionnaire entre les entrées d'enregistrement et les éléments détecteurs.

2. Procédé selon la revendication 1, caractérisé en outre en ce que le réseau (16) d'éléments détecteurs utilisé a une portée sensiblement plus grande qui chaque image d'enregistrement (15) et observe simultanément toutes les entrées d'enregistrement de chaque image tour à tour, et en ce que lesdites valeurs observées sont stockées et lues séquentiellement en vue de ladite étape d'obtention de manière que le moment auquel une valeur est lue présente un rapport connu avec la position de l'élément détecteur respectif le long du réseau (16).

3. Procédé selon la revendication 2, caractérisé en outre en ce que de petits segments successifs d'un détecteur linéaire continu sont lus en dirigeant une onde le long du détecteur, de manière à développer une fenêtre conductrice mobile entre le détecteur et une couche plus conductrice servant à transporter la valeur stockée vers la sortie.

4. Procédé selon la revendication 3, caractérisé en outre en ce que l'onde se propage dans un matériau tel qu'un matériau piézoélectrique (46) qui engendre une tension en réponse à l'onde, cette tension, lorsqu'elle est appliquée à la porte d'une couche continue de matériau formant transistor à effet de champ (40) ouvrant la fenêtre conductrice mobile.

5. Procédé selon la revendication 1 ou 2, caractérisé en outre en ce que lesdites entrées d'enregistrement sont équidistantes dans un premier réseau linéaire (15) et les éléments détecteurs sont équidistants dans un second réseau linéaire (16).

6. Procédé selon la revendication 1, caractérisé en outre en ce que le réseau (16) d'éléments détecteurs utilisés est défini par un ou plusieurs détecteurs qui sont disposés de manière à observer les positions spatiales successives par rapport auxquelles ils forment des éléments détecteurs transitoires.

7. Procédé selon la revendication 1, caractérisé en outre en ce que les sorties d'éléments détecteurs positionnés successivement sont présentées successivement à des intervalles réguliers, et lesdites valeurs modifiées, qui sont limitées à des valeurs représentant seulement lesdites valeurs possibles, sont produites à des moments qui varient par rapport aux moments de présentation des sorties des éléments détecteurs d'une manière qui reflète les amplitudes des sorties des éléments détecteurs.

8. Procédé selon la revendication 7, caractérisé en outre en ce que la variation de la durée de la transition entre chaque valeur modifiée et la suivante, par rapport à la présentation des sorties des éléments détecteurs concernés, est proportionnelle à la différence entre ces sorties et des niveaux prédéfinis.

9. Procédé selon la revendication 8, caractérisé en outre en ce que lesdites valeurs possibles sont les nombres binaires 1 et 0, les transitions entre 1 et 0 sont retardées en proportion de la différence entre la sortie de l'élément détecteur avant et celle qui correspond à 0, et les transitions entre 0 et 1 sont retardées en proportion de la différence entre la sortie de l'élément détecteur avant et celle correspondant à un 1.

10. Procédé selon la revendication 1, caractérisé en outre en ce que les états et/ou les sorties des éléments détecteurs sont lus en série de manière à produire efficacement un signal analogique sur une base de temps, comprenant ledit jeu de valeurs observées, et en ce que ledit second jeu de valeurs en est obtenu en extrayant, dudit signal analogique, un jeu de valeurs modifiées correspondant aux nombres binaires 1 et 0, en utilisant un circuit à communications numériques.

11. Procédé selon la revendication 1, caractérisé en outre en ce que lesdites entrées d'enregistrement sont équidistantes dans un premier réseau linéaire et les éléments détecteurs sont équidistants dans un second réseau linéaire, et en ce que les sorties des éléments détecteurs sont présentées séquentiellement à des intervalles réguliers selon leur position dans le réseau linéaire, le nombre d'éléments détecteurs par entrée d'enregistrement étant supérieur à un et pouvant être ou non un nombre entier, et l'obtention à partir du signal variable continu disponible provenant de chaque élément détecteur d'un signal représentatif des valeurs possibles étant obtenu par échantillonnage des sorties d'éléments détecteurs successifs à des moments qui dépendent de cette sortie, et en déterminant que la valeur modifiée est celle représentée par la valeur possible qui est la plus proche de la sortie du détecteur qui est observée.

12. Procédé selon la revendication 10 ou 11, caractérisé en outre en ce que ladite obtention des valeurs modifiées est réalisée en utilisant un récepteur/émetteur asynchrone universel (REAU).

13. Procédé selon la revendication 1 ou 2, caractérisé en outre en ce que les valeurs possibles sont les nombres binaires 1 et 0, que les distances entre centres des éléments détecteurs et entre les entrées d'enregistrement, qui sont présentées aus éléments détecteurs, sont respectivement égales et uniformes, et en ce que le second jeu de valeurs est obtenu en partie par un transfert de valeurs intermédiaires sensiblement différentes des valeurs de sortie maximale et minimale des éléments détecteurs, en vue de leur addition à d'autres valeurs intermédiaires.

14. Procédé selon la revendication 1, caractérisé en outre en ce que lesdites entrées d'enregistrement sont équidistantes dans un premier réseau linéaire et en ce que les éléments détecteurs sont équidistants dans un second réseau linéaire, et en ce qu'il existe deux ou plusieurs éléments détecteurs dans des sous-réseaux de configuration uniforme par entrée d'enregistrement, et le second jeu de valeurs est obtenu en ignorant les valeurs observées pour des éléments détecteurs dans une ou plusieurs positions correspondantes dans tous les sous-réseaux, lorsqu'une proportion prédéterminée de ces éléments fournit des valeurs observées qui sont suffisamment différentes que celles qui correspondent auxdites valeurs possibles.

15. Procédé selon la revendication 14, caractérisé en outre en ce que lesdites valeurs possibles sont les nombres binaires 0 et 1.

16. Procédé selon la revendication 1 ou 2, caractérisé en outre en ce que lesdites valeurs possibles sont les nombres binaires 1 et 0, les éléments détecteurs sont un nombre entier multiple n, y compris n = 1, des éléments détecteurs, chaque image est observée de façon répétée à mesure que la position des entrées d'enregistrement par rapport au réseau d'éléments détecteurs change, et le second jeu de valeurs est obtenu par une sélection et un échantillonnage d'une observation dans laquelle les valeurs observées sont chacune sensiblement l'une desdites valeurs possibles.

17. Procédé selon la revendication 16, caractérisé en outre en ce que les entrées d'enregistrement sont disposées sur le support d'enregistrement de manière que leurs positions apparentes par rapport au réseau d'éléments détecteurs varient à mesure que le réseau se déplace parallèlement au canal contenant les entrées d'enregistrement.

18. Procédé selon la revendication 1 ou 2, caractérisé en outre en ce que les entrées d'enregistrement sont des zones pouvant être balayées optiquement et d'opacité variable ou se modifiant.

19. Procédé selon la revendication 18, caractérisé en outre en ce que le support d'enregistrement est une microfiche.

20. Procédé selon la revendication 1 ou 2, caractérisé en outre par l'identification d'une ou plusieurs configurations de marquage parmi le second jeu de valeurs, et par l'utilisation de la ou des configurations de marquage pour obtenir à partir du second jeu de valeurs une représentation précise des entrées d'enregistrement de l'image, ladite ou lesdites configurations de marquage étant incapables d'être dupliquées dans la donnée et identifiant le début et/ou la fin des images respectives, et la ou les configurations de marquage étant utilisées pour attribuer des positions et de ce fait une signification aux entrées d'enregistrement indépendamment du ou des éléments détecteurs utilisés pour les observer.

21. Procédé selon la revendication 20, caractérisé en outre en ce que les valeurs possibles sont des nombres binaires 1 et 0, que des bits de donnée obtenus à partir des valeurs observées sont stockés dans un registre à décalage électronique et décalés jusqu'à ce que les configurations connues tombent dans certaines positions de bits reliées à un circuit d'identification binaire.

22. Procédé selon la revendication 21, caractérisé en outre en ce que les états et/ou les sorties des éléments détecteurs sont lus successivement, les bits de donnée (1 et 0) obtenus à partir des valeurs observées sont déplacés successivement dans un registre à décalage, et l'extraction de la donnée complète a lieu quand la configuration de marquage atteint la partie du registre à décalage qui est reliée au circuit d'identification binaire.

23. Procédé selon la revendication 20, caractérisé en outre en ce que les valeurs possibles sont les nombres binaires 1 et 0, les états et/ou les entrées des éléments détecteurs sont lus successivement, les bits de donnée (1 et 0) obtenus à partir des valeurs observées sont entrés dans un circuit de détection qui bloque le système quand il cherche à acquérir la donnée jusqu'à ce que soient détectées une ou plusieurs des configurations connues.

24. Appareil pour lire des informations stockées sur un support d'enregistrement (10) en tant qu'entrées d'enregistrement multiples pouvant être lues par une machine et disposées en images qui sont de leur côté disposés dans un ou plusieurs canaux (14), ces entrées étant indicatrices de valeurs faisant partie d'un jeu limité de valeurs possibles, en vue de la mise en oeuvre du procédé de la revendication 1, comprenant:

un élément de maintien (12) pour supporter ou retenir temporairement ledit support d'enregistrement (10);

un réseau (16) sensiblement connu d'éléments détecteurs mobile par rapport audit élément de maintien (12), chaque élément possédant un champ d'observation limité;

des moyens (24, 34) pour balayer chaque image (15) ay moyen dudit réseau (16) de manière que chaque entrée d'enregistrement soit située au moins en partie dans le champ d'observation d'au moins un élément détecteur pour produire un premier jeu de valeurs observées (figure 4B) pour chaque image présentée par l'état et/ou la sortie des éléments détecteurs; et

des moyens agencés pour recevoir les jeux respectifs de valeurs observées et pour obtenir à partir des valeurs observées dans chaque image un second jeu de valeurs (figure 4C), chacune étant l'une desdites valeurs possibles, représentant des entrées d'enregistrement de l'image (15), lesdits moyens comprenant des moyens pour utiliser les observations faites par le réseau (16) d'éléments détecteurs en vue d'identifier une ou plusieurs configurations de marquage et des moyens pour utiliser la ou lesdites configurations de marquage pour corriger un défaut d'alignement intégral entre les entrées d'enregistrement et les éléments détecteurs,

caractérisé en outre en ce que chaque élément détecteur répond, en utilisation, à chaque entrée d'enregistrement dans les limites de son champ d'observation en rapport avec la fraction de l'entrée d'enregistrement qui est située dans le champ d'observation; et en ce que lesdits moyens d'obtention, lors de l'obtention du second jeu de valeurs, sont agencés pour manipuler le premier jeu de valeurs observées par rapport aux éléments détecteurs, en utilisant les limitations de la plage desdites valeurs possibles, de manière qu'au moins celles des valeurs observées dont on constate qu'elles ne sont pas égales à des valeurs possibles sont modifiées pour devenir l'une desdites valeurs possibles, et corriger tout défaut d'alignement fractionnaire entre les entrées d'enregistrement et les éléments détecteurs.

25. Appareil selon la revendication 24 ou 25, caractérisé en outre en ce que ledit réseau est un réseau linéaire (16) d'éléments détecteurs équidistants.

26. Appareil selon la revendication 24 ou 25, caractérisé en outre en ce que lesdits moyens de balayage comprennent un dispositif de commande (13) prévu pour déplacer sélectivement et relativement le réseau (16) sur le support d'enregistrement (10) dans l'une ou dans deux directions mutuellement perpendiculaires, y compris une direction parallèle aux canaux (14) dudit support d'enregistrement.

27. Appareil selon la revendication 26, caractérisé en outre en ce que le dispositif de commande (13) est prévu pour déplacer relativement le réseau à une vitesse sensiblement constante parallèlement aux canaux (14) et perpendiculairement aux images (15) mais pas à pas parallèlement aux images (15) et perpendiculairement aux canaux (14).

28. Appareil selon la revendication 24 ou 25, destiné à observer optiquement des entrées d'enregistrement, caractérisé en outre en ce que lesdits moyens de balayage comprennent un miroir à courbure cylindrique (20) disposé de manière que l'image d'enregistrement (15) d'un support d'enregistrement (10) maintenu dans ledit élément de maintien (12) soit disposée sur la face du miroir (20) et un autre miroir (20) monté sensiblement dans l'axe de courbure du miroir cylindrique (20) de manière à tourner autour d'un axe parallèle audit axe de courbure, des parcours optiques étant successivement créés entre les images d'enregistrement (15) d'un canal (14) et le réseau (28) d'éléments détecteurs.

29. Appareil selon la revendication 24 ou 25, destiné à l'observation optique d'entrées d'enregistrement, caractérisé en outre en ce que les moyens de balayage comprennent un miroir concave sphérique ou paraboloïdal (30) ou une lentille convexe disposée de manière à faire face aux images d'enregistrement d'un support d'enregistrement (10) monté dans ledit élément de maintien (12) et un autre miroir plus petit (34) monté sensiblement au foyer dudit miroir concave (30) de manière à tourner autour d'au moins un axe, des parcours optiques étant ainsi successivement créés entre les images d'enregistrement (15) d'un canal (14) et le réseau (38) d'éléments détecteurs.

30. Appareil selon la revendication 24, caractérisé en outre en ce que ledit réseau comprend un dispositif semiconducteur comprenant une couche formant transistor à effet de champ (40) dont une face principale est en contact électriquement conducteur avec les éléments détecteurs (42) et une autre face principale est en contact électriquement conducteur avec une couche conductrice juxtaposée (44), et en ce qu'une bande de matériau (46) à proximité de la porte de la couche formant transistor à effet de champ (40) et choisie de manière que lors de la propagation d'une onde dans ledit matériau, une tension soit engendrée qui ouvre une fenêtre de conduction mobile dans la couche formant transistor à effet de champ (40).

31. Appareil selon l'une quelconque des revendications 24 à 30, caractérisé en outre en ce que lesdits moyens d'obtention sont agencés pour obtenir le second jeu de valeurs en partie en réalisant un transfert en succession de valeurs observées finies inférieures à un premier seuil prescrit, qui est lui-même sensiblement inférieur à la valeur observée représentant la valeur possible 1, en vue de son addition à d'autres valeurs respectives disposées en succession et observées, de façon que les sommations résultantes dépassent ledit premier seuil, mais à condition que chaque valeur décalée ne dépasse pas la valeur observée à laquelle elle est ajoutée d'une quantité supérieure à un second seuil.

32. Appareil selon l'une quelconque des revendications 24 à 30, caractérisé en outre en ce que les moyens d'obtention sont agencés pour ignorer les valeurs observées destinées aux éléments détecteurs, dans une ou plusieurs positions correspondantes dans des sous-réseaux de configuration prédéterminée et uniforme d'éléments détecteurs, quand une proportion prédéterminée de ces éléments fournit des valeurs observées suffisamment différentes de celles qui correspondent auxdites valeurs possibles.

33. Appareil selon l'une quelconque des revendications 24 à 30, caractérisé en outre en ce que lesdits moyens d'obtention sont agencés pour sélectionner en tant que ledit second jeu de valeurs une observation dans laquelle les valeurs observées sont chacune sensiblement l'une desdites valeurs possibles.

14

16

10

12

15

13

FIG. 1.

42

46

40

44

FIG. 5.

_FIG. 2._

_FIG. 3._

FIG. 4A.

150

18

FIG. 4B.

FIG. 4C.